# EUROPEAN PATENT SPECIFICATION

(11) **EP 1 601 199 B1**
(45) Date of publication and mention of the grant of the patent: **23.01.2008**
(21) Application number: 04291359.0
(22) Date of filing: 28.05.2004
(51) Int. Cl.: H04N 7/24, H04L 12/28, H04L 12/18, H04L 29/06

(54) **Broadband telecommunications system and method used therein to reduce the latency of channel switching by a multimedia receiver**
Breitbandfernmeldesystem und darin verwendetes Verfahren zur Reduzierung der Latenzzeit eines Kanal-Zappings von einem Multimedia-Empfänger
Système de télécommunication à large bande et procédé utilisé pour réduire la latence d'un zapping de canaux par un récepteur multimédia

(43) Date of publication of application: 30.11.2005
(73) Proprietor: Alcatel Lucent, 75008 Paris (FR)
(72) Inventor: Pelt, Michiel, 1853 Grimbergen (BE)
(74) Representative: Narmon, Gisèle Marie Thérèse

(56) References cited:
- EP-A- 1 359 709
- WO-A-03/073753
- CHUNGLAE CHO ET AL: "Improvement of channel zapping time in IPTV services using the adjacent groups join-leave method" PROCEEDINGS OF THE 6TH INTERNATIONAL CONFERENCE ON ADVANCED COMMUNICATION TECHNOLOGY, PHOENIX PARK, SOUTH KOREA, vol. 2, 9 February 2004 (2004-02-09), - 11 February 2004 (2004-02-11) pages 971-975, XP010702946 ISBN: 89-5519-119-7

## Description

The present invention relates to a method used in a broadband telecommunication system wherein several content servers are coupled to a plurality of subscribers via an access unit for providing to a subscriber of said plurality, and upon request of said subscriber, a selected channel selected by said subscriber.

Such a method used in a broadband telecommunication system is generally known in the art. It relates to multicast delivery that encounters a problem of long and unpredictable latency when the subscriber, or rather the user thereof, changes from one multicast group, i.e. a channel, to another. This latency or delay is particular disturbing for services like broadcast video.

The longer the latency, the longer the subscriber or user will receive an unwanted channel or multicast traffic until the moment the requested channel can be forwarded. This reduces the user experience since people watching television like to zap, i.e. to switch from one channel to another. By zapping, sequentially another channel is selected and viewed for a certain time.

The latency originates from various sources:
1. Protocols used between the access unit, which is preferably an ADSL Subscriber Access Multiplexer (ASAM), and the subscriber or host, such as the Internet Group Management Protocol (IGMP) or the Multicast Listener Discovery (MLD). For instance in case of IGMPv2 (IGMP version 2), a host can send a leave message and a join message when the user connected thereto wants to change to another channel. A leave message informs the access unit not to forward its traffic anymore. A join message informs the access unit to forward another channel. Especially the leave message introduces latency since an access unit cannot decide instantly to stop forwarding the traffic in case other hosts are also members of this multicast group over a same interface. However, in case an access unit keeps *"stateful"* data (of a forwarding table) on the host memberships at every interface, this does not apply. Alternatively, for IGMPv3 the zapping speed will improve significantly since a single message is sent to the access unit that tells it to stop forwarding one channel and to forward another. This decreases the latency significantly. However, time is still required before an access unit decides to block one channel and to forward the newly requested channel.
2. The transfer of content from the content servers up to the access unit:
   - The access unit already receives the requested multicast stream (can be statically configured). In this case, the access unit will instantly forward the multicast traffic over the interfaces specified by the above mentioned protocols used between the access unit and the subscribers, or
   - The access unit does not yet receive the requested multicast stream. In this case, the access unit is a multicast router and uses multicast routing protocols to assure to receive the requested stream. This does not occur instantly and introduces a latency that may depend on the network load and other unpredictable situations.
3. Even when no latency occurs due to protocols, as described above, an unpredictable latency may occur when zapping. For instance, when too many hosts on a network simultaneously demand for another multicast group, i.e. in case of a peak of the number of zaps per second. This is a very realistic scenario occurring for instance during a publicity break in a soccer game or a movie. At that moment, the available resources to inspect the IGMP traffic from all hosts on the network at line rate may not be sufficient, because of lack of CPU processing power.

It is also to be noted that the deployment of IGMPv3 (IGMP version 3) does not exclude IGMPv2. If on a network a single host uses IGMPv2, all other IGMPv3 hosts and routers will fall back to IGMPv2 since IGMPv3 has to be backward compatible with IGMPv2.

Proprietary solutions exist to reduce the latency of zapping. The Alcatel™ ASAM, for instance, performs IGMP snooping whereby a predefined set of multicast channels is statically configured and available to be forwarded using a point-to-multipoint ATM connection. This reduces the latency for channel zapping significantly since:
- the ASAM does not have to use multicast routing protocols to fetch the requested multicast stream, and
- the latency is limited to the performance in the access loop (IGMP messages do not go beyond the ASAM).

However, this also introduces some limitations:
- xDSL subscribers cannot select other than those that are configured, and
- in case all subscribers zap simultaneously then the maximum number of zaps per seconds is reached. The ASAM will not be able to process all these requests simultaneously.

An object of the present invention is to provide a method used in a broadband telecommunication system as mentioned above but wherein the latency encountered by a subscriber that wants to switch to another channel is dramatically reduced.

According to the invention, this object is achieved due to the fact that said method comprises the step of, upon said subscriber requesting the selected channel, immediately providing to said subscriber a composed channel merging converted channels transmitted by said content servers and including a second channel converted from said selected channel, and that said converted channels are substantially identical to said available channels but transmitted with a relatively lower bitrate, and are merged into said composed channel by a Zapping Service Box prior to be transferred to the subscriber.

In this way, by a channel swapping, the newly requested selected channel is immediately provided to the subscriber under the form of the second channel.

Moreover, and in other words, multiple streaming channels are fed to the Zapping Service Box that converts in real time a predefined set of multicast streams into a single stream or composed channel. The composed channel is transmitted on a zapping channel that is broadcasted to the subscribers via the access unit or ASAM. If the ASAM detects that a subscriber is no longer interested in receiving a channel, e.g. under the form of a leave message in case of IGMPv2, it forwards the zapping channel towards this subscriber. In meanwhile, the processing of the request is processed further in the background.

It is to be noted that the Patent Application WO 03/073753 A (MATSUSHITA ELECTRIC INDUSTRIAL CO LTD) of 4 September 2003 and entitled "Information browsing method, transmitting apparatus and receiving apparatus" discloses that "zapping-data is reproduced, whereby the viewer can know the information about a program without waiting for a lapse of reproduction wait time after switching a program channel". In more detail, in a broadcast using packet transmission, zapping-data and program data are packet-transmitted from a transmitting apparatus. A receiving apparatus receives and stores the data and zapping-data. Until the program data selected upon program reproduction becomes reproducible, zapping-data is reproduced, whereby the viewer can know the information about a program without waiting for a lapse of reproduction wait time after switching a program channel.

However, a first difference with the present invention is that the zapping data known from this document is not derived from real data but is received. Moreover, although the "zapping-data requires an extremely less amount of data as compared to the program data" this zapping data is "... configured only by layout information, texts and still images. Also, it may include a program title or program representative screen of video data, or the newest I frame or voice data in several seconds of the data currently on the air". In other words, the known zapping data is "information" about the selected channel and not the selected channel itself or at least a converter version thereof, as is the zapping channel of the present invention. Finally, it is also to be noted that the above document further discloses that the zapping data needs to be stored, which is not the case in the present invention since the zapping channel is immediately transmitted to the subscriber.

It is also to be noted that the document "Improvement of channel zapping time in IPTV services using the adjacent groups join-leave method", by CHUNGLAE CHO et al, PROCEEDINGS OF THE 6TH INTERNATIONAL CONFERENCE ON ADVANCED COMMUNICATION TECHNOLOGY, PHOENIX PARK, SOUTH KOREA, vol. 2, 9 February 2004 - 11 February 2004, pages 971-975, ISBN: 89-5519-119-7, presents a method of improving the channel zapping time by making adjacent multicast groups of current channel come to home gateway In advance. When IP STB requests join to new channel by sending IGMP membership report message, home gateway sends not only IGMP membership report message for the channel but also for the adjacent channels. Therefore, multicast streams for the adjacent channels of current one always come to home gateway. When IP STB requests join to on adjacent channel, home gateway can forward the corresponding multicast stream immediately.

However, although this second known document discloses a method to reduce zapping time, based on the assumption "that the bandwidth of the access network between LHR and home gateway is large enough to accept several TV traffic simultaneously", it is to be noted that "when LP STB requests join to new channel ... , home gateway sends not only IGMP membership report message for the channel but also for the adjacent channels. Therefore multicast streams for adjacent channels of current one always come to home gateway". This clearly indicates that the channels forwarded to the subscriber are limited to channels "adjacent" to the selected one. This limitation is not applicable to the present invention wherein the composed channel contains any channel (or a converted version thereof) transmitted by the content servers, or even all the available channels.

Finally, it is to be noted that the European Patent Application EP-A-1 359 709 (ALCATEL) 5 November 2003, entitled "Facilitating accelerated processing of internet group management protocol messages", discloses a method for facilitating processing of IGMP messages in an accelerated manner. In accordance with such method, an operation is performed for receiving an IGMP Membership Report designating a requested multipoint leaf connection and an operation is performed for assessing entries in a reference table identifying active multicast sessions for determining whether a multicast stream designated in the IGMP Membership Report is already active. In response to determining that the multicast stream is active via a different host than the host designated in the IGMP Membership Report; an entry is created in a reference table identifying active multicast sessions for identifying the host designated in the IGMP Membership Report as an alternate host for the multicast stream designated in the IGMP Membership Report. In response to determining that implementation of the requested multipoint leaf connection is required and that required network resources are unavailable, an operation is performed for determining whether a host designated in the IGMP Membership Report is a sole member of at least one other multicast session. A multicast leaf connection implementation process is performed for implementing the requested multipoint leaf connection in response to determining that required network resources are available.

Although not directly related to the object of the present invention, this last document discloses useful technical background information.

The present invention further relates to a broadband telecommunication system with several content servers coupled to a plurality of subscribers via an access unit.

The subscribers of such a known broadband telecommunication system suffer from the above-mentioned latency problems when requesting to change there coupling to another content server.

A further object of the present invention is to provide a broadband telecommunication system of the above known type but wherein the switching latency experienced by the subscribers is dramatically reduced.

According to the invention, this object is achieved due to the fact that said content servers are coupled to the access unit directly and via a Zapping Service Box adapted to merge channels received from said content servers into a composed channel transmitted to said access unit on a single zapping channel, and that the channels merged in said composed channel are converted channels substantially identical to the channels received from said content servers but transmitted with a relatively lower bitrate.

In this way, and as it will become clear later from the description of the invention, the above latency is reduced by coupling the subscriber to the single zapping channel until the newly requested channel is available at the access unit, that is preferably an ADSL Subscriber Access Multiplexer (ASAM), and so further at the subscriber.

In more detail, said access unit is adapted to connect a subscriber to said zapping service box prior to connect said subscriber to a content server from which said subscriber requests receiving a channel.

Still another characterizing embodiment of the present invention is that the composed channel transmitted on said single zapping channel between said zapping service box and said access unit contains a second channel substantially identical to the channel requested by said subscriber.

The subscriber is coupled the access unit or ADSL Subscriber Access Multiplexer (ASAM) in order to receive this second channel until the new channel is available.

Further characterizing embodiments of the present broadband telecommunication system and the method used therein are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:
Fig. 1 represents a broadband telecommunication system with a Zapping Service Box (ZSB) and an ADSL Subscriber Access Multiplexer (ASAM) interconnected and operating according to the invention; and
Fig. 2 represents the transmission of a view received on the screen of a subscriber (TV3) from the zapping service box and via the ADSL Subscriber Access Multiplexer (ASAM) of Fig.1.

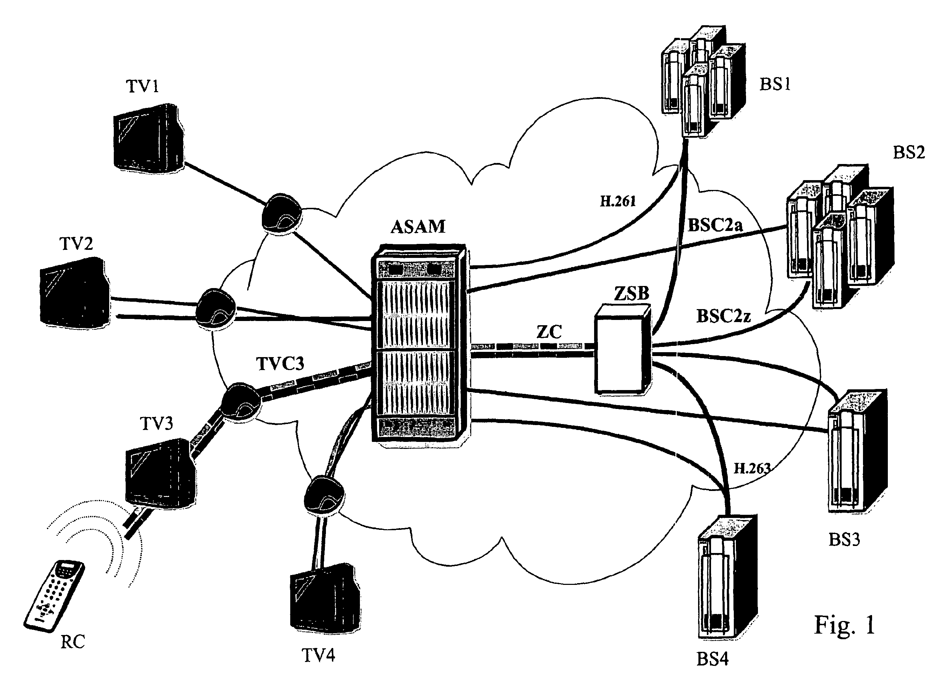

The broadband telecommunication system shown at Fig.1 comprises several content servers BS1 to BS4 coupled to several subscribers TV1 to TV4 via broadband channels. The system further comprises an access unit, that is preferably an Asymmetric Digital Subscriber Line (ADSL) Subscriber Access Multiplexer ASAM, and that interfaces the content servers BS1-4 with the subscribers TV1-4. A content server BS1/4 provides a channel of multimedia data from groups such as for instance BBC™ or CNN™, and a subscriber, e.g. TV3, may select receiving multimedia data from one of these content servers by means of a remote controller RC.

When a subscriber (or the user thereof), e.g. TV3, selects a channel from a content server, e.g. BS2, multimedia data is transmitted from the content server BS2 to the ADSL subscriber access multiplexer ASAM via a channel BSC2a and so further to the subscriber TV3 via a channel TVC3. Most of the multimedia data from the content servers BS1-4 are available at the ASAM so that the latter can immediately provide the requested data to the subscriber selecting it, e.g. by zapping on the remote controller RC. However, in case a requested (selected) multimedia data is not available at the ASAM, the subscriber has to wait prior to receive the expected multimedia data. To reduce this latency, the content servers BS1-4 are also coupled, e.g. via the channel BSC2z for the content server BS2, to a zapping service box ZSB that merges the received multimedia data into a composed channel ZC prior to transfer it to the ADSL subscriber access multiplexer ASAM via a like-named single zapping channel ZC.

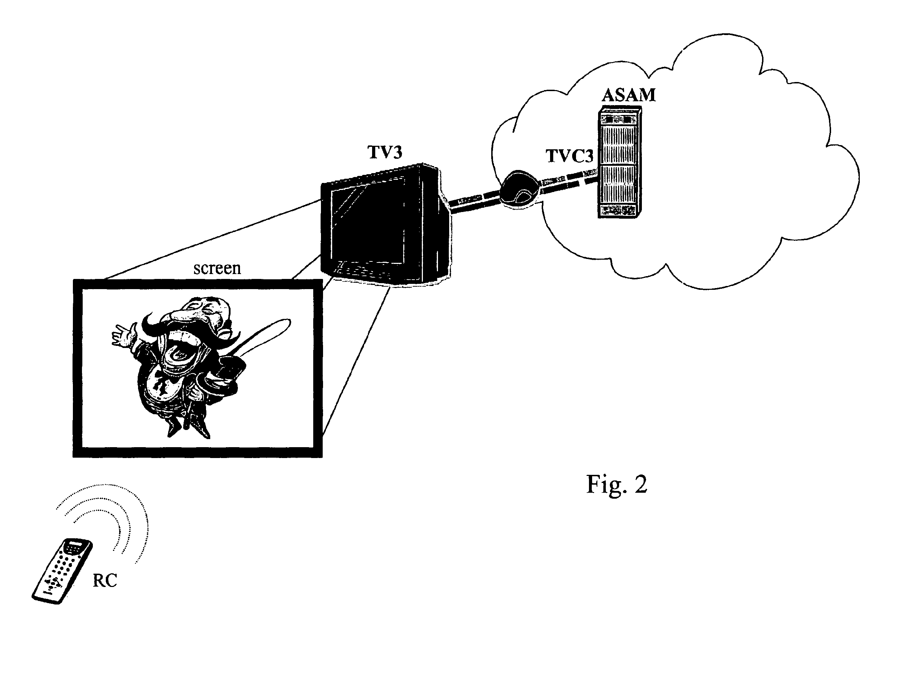

In case a subscriber selects a channel from a content server of which the multimedia data is not yet available at the ASAM, the latter first transmits immediately the zapping channel ZC to this subscriber, e.g. as the screen view shown at Fig. 2, until the multimedia data is directly received at the ASAM from the selected content server.

It is to be noted that several zapping service boxes may be provided in the broadband telecommunication system.

The operation of the broadband telecommunication system with a zapping service box ZSB will be explained in more detail below.

The zapping service box ZSB is a member of a predefined set of multicast groups, e.g. BBC™ or CNN™. As a consequence ZSB receives the multicast traffic of multiple sources BS1-4 in different formats and converts them in real time into a single channel ZC. Besides building this single stream, ZSB has to reduce the quality of the different multicast channels because of the limited bitrate of the outgoing zapping channel ZC. Indeed, the bitrate of the zapping channel ZC must fit to the bandwidth constraints of the broadband connection of the subscribers TV1-4. To that aim, a balance is fixed in-between:
- the number of streams converted into the zapping channel ZC, and
- the bitrate of the individual stream to assure sufficient quality to degrade the user experience not too much.

The zapping channel ZC is forwarded by the zapping service box ZSB towards each ASAM of the broadband telecommunication system.

Once the ASAM detects that the subscriber TV3 wants to change to the channel of BS2, the ASAM immediately forwards the zapping channel ZC without any delay to TV3. The subscriber TV3 receives then the set of predefined channels from the zapping service box ZCB.

Since the zapping channel ZC is instantly forwarded by the ASAM, the subscriber TV3 receives with minimum latency the channel he requested but temporary with less quality. If the subscriber in meanwhile zaps again, and if this new channel is present in the zapping channel ZC, the subscriber can switch to this new channel again without any latency.

It is to be noted that the channel selected by the subscriber TV3 may be extracted from the zapping channel ZC either at the level of the ASAM or at the level of the subscriber itself, e.g. by means of a so-called Set-Top Box (not shown) well known in the art.

Since the zapping channel is forwarded instantly upon detection of an IGMP leave message, there is no faster way possible to respond to the subscriber. In prior art, the leave message has to travel towards the access unit or a box performing IGMP snooping. These devices have to investigate the message before to take any action.

In case the subscriber zaps again, it can immediately switch to another channel inside the zapping channel.

Owing to the zapping service box ZCB time is bought to do processing and to direct the requested multicast traffic towards the subscriber. This avoids dedicating resources to handle a maximum number of zaps per seconds that is rarely used, i.e. when all subscribers simultaneously would zap.

Moreover, instead of sequentially selecting one multicast channel after the other, multiple channels are present in the zapping channel ZC, and the latter is only forwarded once to the subscriber. This avoids that multicast traffic in unnecessary forwarded from the content server up to the subscribers in case a subscriber immediately zaps again.

Furthermore, multicast channels do not have to be statically configured at the ASAM to reduce latency. Some "premium" channels can be offered instantaneously in the zapping channel ZC whereas other channels can be offered after a longer latency time.

In a further application, the zapping channel ZC can be considered as preview channel for available from which a subscriber can select what he wants to see.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the s of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method used in a broadband telecommunication system wherein several content servers (BS1-4) are coupled to a plurality of subscribers (TV1-4) via at least one access unit (ASAM) for providing to a subscriber (TV3) of said plurality, and upon request of said subscriber, a channel (BSC2a) selected by said subscriber amongst a plurality of available channels,
wherein said method comprises the step of, upon said subscriber (TV3) requesting the selected channel, immediately providing by a Zapping Service Box said subscriber a composed channel (ZC) merging converted channels transmitted by said content servers (BS1-4) and including a channel (BSC2z) converted from said selected channel (BSC2a),
**characterized in that** said converted channels carry the same traffic as said available channels but transmitted with a lower bitrate.

2. The method according to claim 1, ***characterized in that*** said method further comprises the step of transmitting said composed channel (ZC) to said subscriber (TV3) until the access unit (ASAM) receives directly said selected channel (BSC2a) from a content server.

3. The method according to claim 2, ***characterized in that,*** when the access unit (ASAM) receives directly said selected channel (BSC2a), said selected channel is transmitted to said subscriber (TV3) rather than said composed channel (ZC).

4. The method according to claim 1, ***characterized in that*** said method further comprises the steps of extracting said second channel (BSC2z) from said composed channel (ZC) and of transmitting the extracted second channel to said subscriber (TV3) until the access unit (ASAM) receives directly said selected channel (BSC2a).

5. The method according to claim 4, ***characterized in that,*** when the access unit (ASAM) receives directly said selected channel (BSC2a), said selected channel is transmitted to said subscriber (TV3) rather than said second channel (BSC2z).

6. The method according to claim 5, ***characterized in that*** the steps of
- extracting the second channel (BSC2z) from the composed channel (ZC),
- transmitting the extracted second channel to the subscriber (TV3), and
- transmitting the selected channel to the subscriber instead of the second channel
are performed by a Set-Top Box (STB) located at the premises of the subscriber.

7. The method according to claim 1, ***characterized in that*** said composed channel is transmitted from said Zapping Service Box (ZSB) to said access unit (ASAM) on a single channel (ZC) and **in that** said composed channel is always available at said access unit.

8. The method according to claim 1, ***characterized in that*** said second channel (BSC2z) and said selected channel (BSC2a) are transmitted by a same content server.

9. The method according to claim 1, ***characterized in that*** said second channel (BSC2z) is of lower quality than said selected channel (BSC2a).

10. The method according to claim 1, ***characterized in that*** said access unit is an Asymmetric Digital Subscriber Line (ADSL) Subscriber Access Multiplexer (ASAM).

11. A broadband telecommunication system with several content servers (BS1-4) coupled to a plurality of subscribers (TV1-4) via an access unit (ASAM), for providing to a subscriber (TV3) of said plurality, and upon request of said subscriber, a channel (BSC2a) selected by said subscriber amongst a plurality of available of channels
wherein said content servers (BS1-4) are coupled to the access unit (ASAM) directly and via a Zapping Service Box (ZSB) adapted to upon said subscriber (TV3) requesting the selected channel, immediately providing to said subscriber a composed channel (ZC) containing converted channels transmitted by a plurality of said content servers (BS1-4) and including a channel (BSC2z) converted from selected channel (BSC2a)
**characterized in that** carry the same traffic as the available channels the converted channels but transmitted with a lower bitrate.

12. The broadband telecommunication system according to claim 11, ***characterized in that*** said Zapping Service Box (ZSB) is included in said access unit (ASAM).

13. The broadband telecommunication system according to claim 11, ***characterized in that*** said access unit (ASAM) is adapted to connect a subscriber (TV3) to said zapping service box (ZSB) prior to connect said subscriber (TV3) to a content server (BS2) from which said subscriber requests receiving a channel (BSC2a).

14. The broadband telecommunication system according to claim 11, ***characterized in that*** the composed channel between said zapping service box (ZSB) and said access unit (ASAM) contains a channel (BSC2z) converted from said selected channel.

15. The broadband telecommunication system according to claim 11, ***characterized in that*** said subscriber (TV3) is a multimedia receiver, *and **in that*** said channels (BSC2a, BSC2z) form multicast traffic.

16. The broadband telecommunication system according to claim 11, ***characterized in that*** said access unit is an Asymmetric Digital Subscriber Line (ADSL) Subscriber Access Multiplexer (ASAM).

## Patentansprüche

1. Verfahren zum Einsatz in einem Breitbandfernmeldesystem, in dem mehrere Inhalts-Server (BS1-4) über mindestens eine Zugangseinheit (ASAM) mit einer Vielzahl von Teilnehmern (TV1-4) gekoppelt sind, um einem Teilnehmer (TV3) aus der Vielzahl auf Anforderung dieses Teilnehmers einen Kanal (BSC2a) bereitzustellen, der von dem Teilnehmer aus einer Vielzahl von verfügbaren Kanälen ausgewählt wurde,
wobei das Verfahren den Schritt umfasst, wenn der Teilnehmer (TV3) den ausgewählten Kanal anfordert, sofort durch eine Zapping-Service-Box dem Teilnehmer einen zusammengesetzten Kanal (ZC) bereitzustellen, der umgewandelte Kanäle, die von den Inhalts-Servern (BS1-4) gesendet werden, zusammenfasst und einen Kanal (BSC2z) enthält, der aus dem ausgewählten Kanal (BSC2a) umgewandelt wurde,
**dadurch gekennzeichnet, dass** die umgewandelten Kanäle denselben Verkehr übertragen wie die verfügbaren Kanäle, aber mit einer kleineren Bitrate übertragen werden.

2. Verfahren gemäß Anspruch 1, **dadurch gekennzeichnet, dass** das Verfahren weiterhin den Schritt umfasst, den zusammengesetzten Kanal (ZC) zu dem Teilnehmer (TV3) zu übertragen, bis die Zugangseinheit (ASAM) den ausgewählten Kanal (BSC2a) direkt von einem Inhalts-Server empfängt.

3. Verfahren gemäß Anspruch 2, **dadurch gekennzeichnet, dass** wenn die Zugangseinheit (ASAM) den ausgewählten Kanal (BSC2a) direkt empfängt, anstelle des zusammengesetzten Kanals (ZC) der ausgewählte Kanal zu dem Teilnehmer (TV3) gesendet wird.

4. Verfahren gemäß Anspruch 1, **dadurch gekennzeichnet, dass** das Verfahren weiterhin die Schritte umfasst, den zweiten Kanal (BSC2z) aus dem zusammengesetzten Kanal (ZC) zu entnehmen und den entnommenen zweiten Kanal an den Teilnehmer (TV3) zu senden, bis die Zugangseinheit (ASAM) den ausgewählten Kanal (BSC2a) direkt empfängt.

5. Verfahren gemäß Anspruch 4, **dadurch gekennzeichnet, dass** wenn die Zugangseinheit (ASAM) den ausgewählten Kanal (BSC2a) direkt empfängt, anstelle des zweiten Kanals (BSC2z) der ausgewählte Kanal an den Teilnehmer (TV3) gesendet wird.

6. Verfahren gemäß Anspruch 5, **dadurch gekennzeichnet, dass** die Schritte
- Entnehmen des zweiten Kanals (BSC2z) aus dem zusammengesetzten Kanal (ZC),
- Senden des entnommenen zweiten Kanals an den Teilnehmer (TV3), und
- Senden des ausgewählten Kanals anstelle des zweiten Kanals an den Teilnehmer
von einer Set-Top-Box (STB) ausgeführt werden, die sich am Standort des Teilnehmers befindet.

7. Verfahren gemäß Anspruch 1, **dadurch gekennzeichnet, dass** der zusammengesetzte Kanal von der Zapping-Service-Box (ZSB) zur Zugangseinheit (ASAM) auf einem einzigen Kanal (ZC) übertragen wird, und **dadurch**, dass der zusammengesetzte Kanal an der Zugangseinheit immer zur Verfügung steht.

8. Verfahren gemäß Anspruch 1, **dadurch gekennzeichnet, dass** der zweite Kanal (BSC2z) und der ausgewählte Kanal (BSC2a) durch denselben Inhalts-Server gesendet werden.

9. Verfahren gemäß Anspruch 1, **dadurch gekennzeichnet, dass** der zweite Kanal (BSC2z) eine geringere Qualität hat als der ausgewählte Kanal (BSC2a).

10. Verfahren gemäß Anspruch 1, **dadurch gekennzeichnet, dass** die Zugangseinheit ein Asymmetric Digital Subscriber Line (ADSL) Teilnehmer-Zugangs-Multiplexer (ASAM) ist.

11. Breitbandfernmeldesystem mit mehreren Inhalts-Servern (BS1-4), die über eine Zugangseinheit (ASAM) mit einer Vielzahl von Teilnehmern (TV1-4) gekoppelt sind, um einem Teilnehmer (TV3) aus der Vielzahl auf Anforderung dieses Teilnehmers einen Kanal (BSC2a) bereitzustellen, der von dem Teilnehmer aus einer Vielzahl von verfügbaren Kanälen ausgewählt wurde,
wobei die Inhalts-Server (BS1-4) direkt und über eine Zapping-Service-Box (ZSB), die angepasst ist, wenn der Teilnehmer (TV3) den ausgewählten Kanal anfordert, dem Teilnehmer sofort einen zusammengesetzten Kanal (ZC) bereitzustellen, der umgewandelte Kanäle enthält, die von einer Vielzahl von Inhalts-Servern (BS1-4) gesendet werden, und einen Kanal (BSC2z) enthält, der aus dem ausgewählten Kanal (BSC2a) umgewandelt wurde, mit der Zugangseinheit (ASAM) gekoppelt ist,
**dadurch gekennzeichnet, dass** die umgewandelten Kanäle denselben Verkehr übertragen wie die verfügbaren Kanäle, aber mit einer kleineren Bitrate übertragen werden.

12. Breitbandfernmeldesystem gemäß Anspruch 11, **dadurch gekennzeichnet, dass** die Zapping-Service-Box (ZSB) in der Zugangseinheit (ASAM) enthalten ist.

13. Breitbandfernmeldesystem gemäß Anspruch 11, **dadurch gekennzeichnet, dass** die Zugangseinheit (ASAM) angepasst ist, einen Teilnehmer (TV3) mit der Zapping-Service-Box (ZSB) zu verbinden, bevor der Teilnehmer (TV3) mit einem Inhalts-Server (BS2) verbunden wird, von dem der Teilnehmer den Empfang eines Kanals (BSC2a) anfordert.

14. Breitbandfernmeldesystem gemäß Anspruch 11, **dadurch gekennzeichnet, dass** der zusammengesetzte Kanal zwischen der Zapping-Service-Box (ZSB) und der Zugangseinheit (ASAM) einen Kanal (BSC2z) enthält, der aus dem ausgewählten Kanal umgewandelt wird.

15. Breitbandfernmeldesystem gemäß Anspruch 11, **dadurch gekennzeichnet, dass** der Teilnehmer (TV3) ein Multimedia-Empfänger ist, und **dadurch** dass die Kanäle (BSC2a, BSC2z) Multicast-Verkehr bilden.

16. Breitbandfernmeldesystem gemäß Anspruch 11, **dadurch gekennzeichnet, dass** die Zugangseinheit ein Asymmetric Digital Subscriber Line (ADSL) Teilnehmer-Zugangs-Multiplexer (ASAM) ist.

## Revendications

1. Procédé utilisé dans un système de télécommunication à large bande,
dans lequel plusieurs serveurs de contenu (BS1 à BS4) sont couplés à une pluralité de abonnés (TV1 à TV4) par le biais d'au moins une unité d'accès (ASAM) afin de fournir à un abonné (TV3) de ladite pluralité, et à la demande dudit abonné, un canal (BSC2a) sélectionné par ledit abonné parmi une pluralité de canaux disponibles,
dans lequel ledit procédé comprend l'étape consistant, lorsque ledit abonné (TV3) demande le canal sélectionné, à fournir immédiatement par un boîtier de service de zappage au dit abonné un canal composé (ZC) fusionnant des canaux convertis transmis par lesdits serveurs de contenu (BS1 à BS4) et comprenant un canal (BSC2z) converti à partir dudit canal sélectionné (BSC2a),
**caractérisé en ce que** lesdits canaux convertis transportent le même trafic que lesdits canaux disponibles, mais transmis à un débit binaire plus lent.

2. Procédé selon la revendication 1, **caractérisé en ce que** ledit procédé comprend en outre l'étape consistant à transmettre ledit canal composé (ZC) au dit abonné (TV3) jusqu'à ce que l'unité d'accès (ASAM) reçoive directement ledit canal sélectionné (BSC2a) d'un serveur de contenu.

3. Procédé selon la revendication 2, **caractérisé en ce que**, lorsque l'unité d'accès (ASAM) reçoit directement ledit canal sélectionné (BSC2a), ledit canal sélectionné, plutôt que ledit canal composé (ZC), est transmis au dit abonné (TV3).

4. Procédé selon la revendication 1, **caractérisé en ce que** ledit procédé comprend en outre les étapes consistant à extraire ledit deuxième canal (BSC2z) dudit canal composé (ZC) et à transmettre le deuxième canal extrait au dit abonné (TV3) jusqu'à ce que l'unité d'accès (ASAM) reçoive directement ledit canal sélectionné (BSC2a).

5. Procédé selon la revendication 4, **caractérisé en ce que**, lorsque l'unité d'accès (ASAM) reçoit directement ledit canal sélectionné (BSC2a), ledit canal sélectionné, plutôt que ledit deuxième canal, est transmis au dit abonné (TV3) (BSC2z).

6. Procédé selon la revendication 5, **caractérisé en ce que** les étapes consistant à :
- extraire le deuxième canal (BSC2z) du canal composé (ZC),
- transmettre le deuxième canal extrait à l'abonné (TV3), et
- transmettre le canal sélectionné à l'abonné au lieu du deuxième canal
sont effectuées par un boîtier décodeur (STB : Set-Top Box) situé au domicile de l'abonné.

7. Procédé selon la revendication 1, **caractérisé en ce que** ledit canal composé est transmis dudit boîtier de service de zappage (ZSB) à ladite unité d'accès (ASAM) sur un seul canal (ZC) et **en ce que** ledit canal composé est toujours disponible au niveau de ladite unité d'accès.

8. Procédé selon la revendication 1, **caractérisé en ce que** ledit deuxième canal (BSC2z) et ledit canal sélectionné (BSC2a) sont transmis par un même serveur de contenu.

9. Procédé selon la revendication 1, **caractérisé en ce que** ledit deuxième canal (BSC2z) est de qualité moindre que le canal sélectionné (BSC2a).

10. Procédé selon la revendication 1, **caractérisé en ce que** ladite unité d'accès est un multiplexeur d'abonné pour une ligne d'abonné numérique à débit asymétrique (ADSL) (ASAM).

11. Système de télécommunication à large bande avec plusieurs serveurs de contenu (BS1 à BS4), couplés à une pluralité d'abonnés (TV1 à TV4) par le biais d'une unité d'accès (ASAM), afin de fournir à un abonné (TV3) de ladite pluralité, et à la demande dudit abonné, un canal (BSC2a) sélectionné par ledit abonné parmi une pluralité de canaux disponibles,
dans lequel lesdits serveurs de contenu (BS1 à BS4) sont couplés à l'unité d'accès (ASAM) directement et par le biais d'un boîtier de service de zappage (ZSB) adapté lorsque ledit abonné (TV3) demande un canal sélectionné, pour fournir immédiatement au dit abonné un canal composé (ZC) contenant des canaux convertis transmis par une pluralité desdits serveurs de contenu (BS1 à BS4) et comprenant un canal (BSC2z) converti à partir du canal sélectionné (BSC2a),
**caractérisé en ce que** les canaux convertis transportent le même trafic que les canaux disponibles, mais transmis avec un débit binaire plus lent.

12. Système de télécommunication à large bande selon la revendication 11, **caractérisé en ce que** ledit boîtier de service de zappage (ZSB) est inclus dans ladite unité d'accès (ASAM).

13. Système de télécommunication à large bande selon la revendication 11, **caractérisé en ce que** ladite unité d'accès (ASAM) est adaptée pour connecter un abonné (TV3) au dit boîtier de service de zappage (ZSB) avant de connecter ledit abonné (TV3) à un serveur de contenu (BS2) à partir duquel ledit abonné demande de recevoir canal (BSC2a).

14. Système de télécommunication à large bande selon la revendication 11, **caractérisé en ce que** le canal composé entre ledit boîtier de service de zappage (ZSB) et ladite unité d'accès (ASAM) contient un canal (BSC2z) converti à partir dudit canal sélectionné.

15. Système de télécommunication à large bande selon la revendication 11, **caractérisé en ce que** ledit abonné (TV3) est un récepteur multimédia, et **en ce que** lesdits canaux (BSC2a, BSC2z) forment le trafic de multidiffusion.

16. Système de télécommunication à large bande selon la revendication 11, **caractérisé en ce que** ladite unité d'accès est un multiplexeur d'abonné pour une ligne d'abonné numérique à débit asymétrique (ADSL) (ASAM).
